# EUROPÄISCHE PATENTSCHRIFT

(11) **EP 1 137 219 B1**
(45) Veröffentlichungstag und Bekanntmachung des Hinweises auf die Patenterteilung: **13.10.2004**
(21) Anmeldenummer: 01440073.3
(22) Anmeldetag: 14.03.2001
(51) Int. Cl.: H04L 7/06, H04B 1/707, H04J 7/00, H04J 13/00

(54) **Sende- und Empfangseinrichtung für ein Mehrpunkt-zu-Punkt Netzwerk**
Transceiver in a multipoint to point network
Emetteur récepteur dans un réseau multipoints à point

(30) Priorität: 20.03.2000 DE 10013678
(43) Veröffentlichungstag der Anmeldung: 26.09.2001
(73) Patentinhaber: ALCATEL, 75008 Paris (FR)
(72) Erfinder: Otterbach, Jürgen, 70499 Stuttgart (DE); Schwoerer, Gabriele, 71263 Weil der Stadt (DE); Halbauer, Hardy, 76275 Ettlingen (DE); Jaenecke, Peter, Dr., 75334 Straubenhardt (DE)
(74) Vertreter: Menzietti, Domenico, Dipl.-Ing

(56) Entgegenhaltungen:
- EP-A- 0 678 991
- DE-A- 19 928 019

## Beschreibung

Die Erfindung bezieht sich auf eine Sende- und eine Empfangseinrichtung für ein Mehrpunkt-zu-Punkt Netzwerk, insbesondere ein synchrones Mehrpunkt-zu-Punkt CDMA Netzwerk, gemäß dem Oberbegriff des Patentanspruchs 1 bzw. dem Oberbegriff des Patentanspruchs 3 sowie auf ein Synchronisationsverfahren für ein Mehrpunkt-zu-Punkt Netzwerk gemäß dem Oberbegriff des Patentanspruchs 10.

Mehrpunkt-zu-Punkt Netzwerke, insbesondere Mehrpunkt-zu-Punkt CDMA Netzwerke lassen sich vorteilhaft zur Realisierung von Rückkanälen in interaktiven Kommunikationsnetzen einsetzen. Interaktive Kommunikationsnetze sind beispielsweise als sog. HFC-Netze oder HFR-Netze ausgeführt; HFC=Hybrid Fibre Coax, HFR=Hybrid Fibre Radio. Für den Vowärtskanal wird ein Punkt-zu-Mehrpunkt Netzwerk verwendet, das einen optischer Zubringer plus ein daran anschließendes Koaxialkabelnetz bzw. Funknetz beinhaltet. Für den Rückkanal wird zunehmend ein Mehrpunkt-zu-Punkt Netzwerk, z.B. ein CDMA Netzwerk verwendet, das optisch, elektrisch oder als Funknetz sowie in Mischformen ausgebildet werden kann; CDMA=Code Division Multiple Access.

Bei einem synchronen CDMA-Netzwerk mit einer Zentrale und einer Vielzahl von Endstellen kommt hinzu, daß die Endstellen auf den Takt (master clock) der Zentrale in Frequenz und Phase synchronisiert werden müssen. Der Takt der Zentrale wird über den Vorwärtskanal zu den Endstellen übertragen, die jeweils mittels einer PLL (Phase Locked Loop) eine Frequenzsynchronisations durchführen und eine Phasensynchronisation mit Phasenkorrektur, um ihren individuellen Takt zu generieren. Zur Aufsynchronisation sendet jede Endstelle ein Synchronisationssignal über den Rückkanal des CDMA Mehrpunkt-zu-Punkt Netzwerks zur Zentrale.

Es ist bereits ein Synchronisationsverfahren bekannt, bei dem Synchronisationssignale CDMA kodiert zur Zentrale gesendet werden. Der Rückkanal ist dabei zeitlich aufgeteilt in einen ersten Bereich, der für die Übermittlung von Informationssignalen reserviert ist und einen zweiten Bereich, der für die Übermittlung von Synchronisationssignalen reserviert ist. Der zweite Bereich steht somit nicht zur Informationsübermittlung zur Verfügung, wodurch die vorhandene Übertragungskapazität nicht optimal ausgenutzt wird.

Aus EP 0 678 991 A2 ist ein Verfahren zur Steuerung des Signalpegels eines Synchronisationssignals in einem Spreizspektrum-Kommunikationssystem bekannt. In einer ersten Station wird zunaechst ein Synchronisatonssignal generiert und zu einer zweiten Station uebertragen. Die zweite Station synchronisiert sich auf das ausgesendeten Synchronisationssignal und sendet ein Bestaetigungssignal zur ersten Station. Die erste Station reduziert daraufhin die Leistung des Synchronisationssignals, sendet es aber weiterhin wiederholt aus und startet zusaetzlich mit der Aussendung eines modulierten Datensignals. Die zweite Station benutzt die empfangenen Synchronisationssignale zur Aufrechterhaltung der Synchronisation und zur Demodulation des Datensignals.

Aufgabe der Erfindung ist es daher, ein Synchronisationsverfahren bereitzustellen, das den Einfluß auf die Informationsübermittlung minimiert und dabei die vorhandene Übertragungskapazität besser ausnutzt.

Gelöst wird diese Aufgabe durch eine Sende- und eine Empfangseinrichtung gemäß Patentanspruch 1 bzw. Patentanspruch 3 sowie ein Synchronisationsverfahren gemäß Patentanspruchs 10.

Anstelle einer zeitlichen Schachtelung von Informations- (=Kommunikations-) und Synchronisationssignalen wird eine gleichzeitige Aussendung vorgeschlagen, bei der die Synchronisationssignale den Informationssignalen überlagert werden. Die Synchronisationssignale werden beispielsweise mit einem speziellen Synchronisations-Kode kodiert, der nicht dem CDMA-Kommunikations-Kode der Informationssignale entspricht. Zusätzlich oder alternativ werden die Synchronisationsignale mit einem im Vergleich zu den Informationsignalen geringeren Signalpegel ausgesandt, um die Übertragung der Kommunikationssignale nicht übermäßig zu stören. Vor der Aussendung der kodierten Synchronisationssignale werden diese moduliert. Die Modulation wird beispielsweise unter Verwendung einer alternierenden Multiplikation mit + 1 und -1 durchgeführt. Dies hat den Vorteil, dass mehrere zeitlich nacheinander ausgesandte Synchronisationssignale im Mittel keinen DC-Offset erzeugen, d.h. der Gleichstromanteil gleich Null ist. Dadurch wird die Beeinflussung der Kommunikationssignale durch die Synchronisationssignale minimiert. Auf der Empfangsseite werden die Synchronisationssignale durch Demodulation, z.B. unter Verwendung einer alternierenden Multiplikation mit +1 und -1, und anschließender Korrelation mit integrierter Akkumulation detektiert. Die alternierende Multiplikation mit + 1 und -1 wird mit einem Takt durchgeführt, der dem Symboltakt der Kommunikationssignale entspricht. Da die Synchronisationssignale zu beliebigen Zeitpunkten ausgesandt werden können, insbesondere nicht mit dem empfangsseitigen Demodulator synchronisiert, kann es vorkommen, dass die Synchronisationssignale auf der Empfangsseite zu einem Zeitpunkt eintreffen, bei dem eine Umschaltung von + 1 auf-1 oder von -1 auf + 1 erfolgt. Um zu gewährleisten, dass auch für diesen Fall die Synchronisationssignale detektierbar sind, ist die Möglichkeit einer Demodulation zu mindestens zwei unterschiedlichen Zeitpunkten, die um eine vorgegebne Zeitspanne, z.B. eine halbe Taktperiode, auseinander liegen, geschaffen worden.

Durch dieses Verfahren wird die Übertragungskapazität für die Kommunikationssignale maximiert. Es müssen keine zeitlichen Lücken/Bereiche im Rückkanal mehr für die Aufsynchronisation freigehalten werden; die Kommunikationssignale können kontinuierlich ausgesandt werden. Zudem wird die Aufsynchronisationszeit dadurch verringert, daß erstens keine zeitlliche Lücke/Bereich mehr abgewartet werden muß, in der/dem die Übertragung der Synchronisationsignale zwingend erfolgen mußte, sondern die Synchronisationssignale können nun jederzeit ausgesandt werden.

Zweitens kann durch die Verwendung eines speziellen Synchronisations-Kodes, der wesentlich kürzer als der CDMA-Kommunikations-Kode ist, der Hardware-Aufwand für die Detektion der Synchronisationsignale reduziert werden.

Die negative Beeinflussung der Informationssignale durch die Synchronisationssignale kann durch eine Regelung der Signalpegel, z.B. online unter Berücksichtigung der tatsächlichen Signal-zu-Rausch Verhältnisse minimiert werden.

Die Erfindung kann grundsätzlich in allen Netzen angewendet werden, in denen erste und zweite Signale gleichzeitig übertragen werden und bei denen die Beeinflussung der ersten Signale durch die zweiten Signale minimiert werden soll.

Vorteilhafte Ausgestaltungen sind den abhängigen Ansprüchen zu entnehmen.

Im folgenden werden zwei Ausführungsbeispiele der Erfindung unter Zuhilfenahme von zwei Figuren erläutert. Es zeigen:
- Fig. 1: eine schematische Darstellung eines erfindungsgemäßen CDMA Mehrpunkt-zu-Punkt Netzwerks und
- Fig. 2: eine schematische Darstellung eines Teils einer erfindungsgemäßen Empfangseinrichtung.

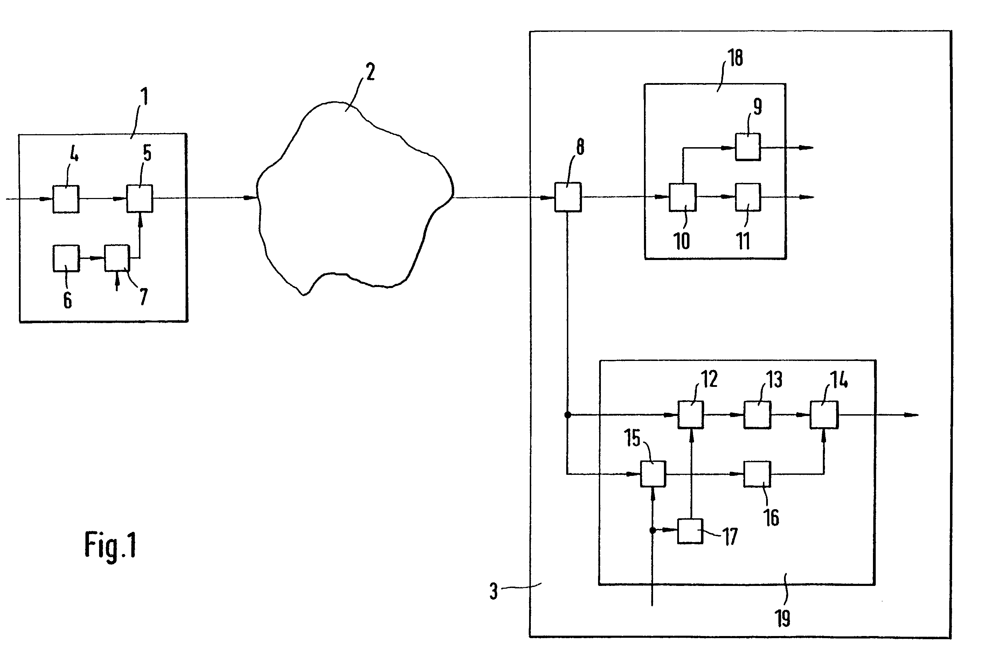

Das erste Ausführungsbeispiel wird nun unter Zuhilfenahme von Fig. 1 erläutert. Fig. 1 zeigt ein CDMA Mehrpunkt-zu-Punkt Netzwerk 2 mit einer erfindungsgemäßen Sendeeinrichtung 1 und einer erfindungsgemäßen Empfangseinrichtung 3. Das CDMA Mehrpunkt-zu-Punkt Netzwerk 2 stellt den Teil eines interaktiven Kommunikationsnetzes dar, der für die Implementierung des Rückkanals vorgesehen ist. Für den Vorwärtskanal des interaktiven Kommunikationsnetzes, der für die Übertragung von breitbandigen Informationen, wie z.B. Fernsehsignale, Videosignale, Steuersignale, von einer Zentrale zu mehreren Endstellen vorgesehen ist, ist aus Gründen der Übersichtlichkeit keine schematische Darstellung erfolgt. Der Vorwärtskanal kann beispielsweise durch ein hybrides Netzwerk implementiert werden, das ausgehend von der Zentrale die Endstellen über ein Verteilnetz aus optischen Glasfaserleitungen und optischen Splittern miteinander zu einem Punkt-zu-Mehrpunkt Netzwerk verknüpft. Anstelle von optischen Leitungen können auch elektrische verwendet werden oder ein Funknetz sowie eine Mischform aus den vorgenannten. An den Übergangsstellen werden sog. ONU, BONT oder BS verwendet; ONU=Optical Network Unit, BONT=Broadband Optical Network Termination, BS=Base Station.

Anstelle zweier separater Netzwerke für den Vorwärtskanal und den Rückkanal kann auch ein und dasselbe physikalische Netzwerk bidirektional sowohl für den Vorwärts- als auch den Rückkanal verwendet werden. Dann ist das Netzwerk beispielsweise aus optischen Leitungen aufgebaut, wobei für den Vorwärtskanal üblicherweise eine andere Wellenlänge verwendet wird als für den Rückkanal.

Das CDMA Mehrpunkt-zu-Punkt Netzwerk 2 stellt somit eine Möglichkeit einer Implementierung eines Rückkanals eines interaktiven Kommunikationsnetzes dar.

Die Sendeeinrichtung 1 ist Teil einer Endstelle. Jede an das CDMA Mehrpunkt-zu-Punkt Netzwerk 2 angeschlossene Endstelle beinhaltet eine Sendeeinrichtung, die der Sendeinrichtung 1 entspricht.

Die Zentrale, die üblicherweise auch als Head End bezeichnet wird, beinhaltet die Empfangseinrichtung 3, die dem Empfang der von den Endstellen ausgesandten Kommunikationssignalen, z.B. Anforderungssignale zur Übermittlung von Videofilmen, sog. Video-on-demand, oder web pages aus dem Internet, und der von den Endstellen ausgesandten Synchronisationssignalen dient. Die Zentrale beinhaltet des weiteren eine Steuereinheit, die die Verarbeitung der empfangenen Signale aus den Endstellen übernimmt. Die Steuereinheit ist beispielsweise als Prozessor plus Speicher, Register, etc. ausgeführt. Die Steuereinheit hat eine Schnittstelle zu einer nicht dargestellten Sendeeinheit, die Kommunikationssignale über den Vorwärtskanal überträgt sowie ggf. weitere Schnittstellen zu höheren Netzelementen, z.B. zu einer Fernsehanstalt für einen Zugang zu Fernsehsignalen, zu einem Internet-Serviceprovider für einen Zugang zum Internet oder zu einem Video-Server für einen Zugang zu Videofilmen.

Die Sendeeinrichtung 1 ist für das synchrones Mehrpunkt-zu-Punkt CDMA Netzwerk 2 ausgelegt. Die Sendeeinrichtung 1 beinhaltend eine Einheit 4 zur Generierung eines CDMA-kodierten Kommunikationssignals sowie eine Einheit 6 zur Generierung eines Synchronisationssignals. Die Kodierung des Synchronisationssignals erfolgt mittels eines Synchronisations-Kodes, der kein CDMA-Kommunikations-Kode ist. Der Signalpegel des Synchronisationssignals ist in der Regel wesentlich niedriger, mindestens 10dB, z.B. 20dB niedriger als der Summen-Signalpegel der Kommunikationssignale der aktiven Endstellen. Die Signalleistung des Synchronisationssignals kann dynamisch variiert werden, z.B. adaptiv in Abhängigkeit von der Anzahl der sich gleichzeitig aufsynchronisierenden Endstellen. Die Signalleistung wird so gewählt, dass die Summe der Signalleistungen aller sich aufsynchronisierenden Endstellen die Informationsübertragung nicht beeinträchtigt. Die Zentrale kann z.B. die Sendeleistung für die nachfolgend auszusendenden Synchronisationssignale über den vorhandenen Vorwärtskanal vorgeben. Es können auch weitere Informationen wie z.B. Synchronisationsaufforderung, Anzahl der zu sendenden Signale, Kollisionsauflösungs-Signale über den Vorwärtskanal vorgegeben werden. Das Synchronisationssignal im Rückkanal wird im gleichen Übertragungskanal und/oder im gleichen Frequenzbereich wie das Kommunikationssignal ausgesandt.

Die Sendeeinrichtung 1 beinhaltet ferner einen Modulator 7. Der Modulator 7 dient der Modulation der kodierten Synchronisationssignale. Die Modulation wird beispielsweise unter Verwendung einer Multiplikation mit + 1 und -1 durchgeführt. Der Modulator 7 wird angesteuert mit einem Takt, der dem Symboltakt eines gespreizten Kommunikationssignals entspricht. In der ersten Taktperiode wird eine Multiplikation mit + 1 durchgeführt, in der zweiten Taktperiode eine Multiplikation mit -1, in der dritten Taktperiode eine Multiplikation mit +1, usw., also alternierend. Durch die Modulation wird erreicht, dass die Synchronisationssignale im Mittel keinen DC-Offset haben. Dadurch wird die Beeinflussung der Demodulation und Dekorrelation der Kommunikationssignale durch die Synchronisationssignale minimiert.

Des weiteren ist eine Einheit 5 vorgesehen. Die Einheit 5 beinhaltet einen elektro-optischen Wandler, einen HF-Sender oder eine Sendeantenne für eine Kundeneinheit. Die Einheit 5 beinhaltet ggf. einen Schalter, der verhindert, dass Synchronisationssignale und Kommunikationssignale gleichzeitig ausgesandt werden. Zur Aufsynchronisation werden ausschließlich Synchronisationssignale, während der Informationsübertragung ausschließlich Kommunikationssignale ausgesandt.

Die Empfangseinrichtung 3 der Zentrale ist für das synchrones Mehrpunkt-zu-Punkt CDMA Netzwerk 2 ausgelegt und beinhaltet dementsprechend eine Einheit 18 zum Empfang und zur Detektion eines CDMA-kodierten Kommunikationssignals und eine Einheit 19 zum Empfang und zur Detektion eines Synchronisationssignals.

Die Einheit 18 beinhaltet einen logischen Korrelator 9 sowie einen Early/Late-Korrelator 11.

Der logische Korrelator 9 ist als CDMA Korrelator ausgelegt. Er dient dem Empfang der Kommunikationssignale, und der Detektion der in den Kommunikationssignalen enthaltenen Daten. Die detektierten Daten werden einer Auswerteeinheit zur weiteren Verarbeitung zugeführt.

Der Early/Late-Korrelator 11 dient der Erzeugung des sogenannten Tracking Signals aus den empfangenen Kommunikationssignalen. Das Tracking Signal wird über den Vorwärtskanal zur Feinjustierung der Phase der von den Endstellen auszusendenden Kommunikationssignale genutzt. Durch die Modulation der Synchronisationssignale auf der Sendeseite wird insbesondere erreicht, dass die Detektion und die Erzeugung des Tracking Signals nicht beeinträchtigt wird und dadurch keine falsche Synchronisierung verursacht wird.

Die Einheit 19 beinhaltet zwei Arme, wobei der eine Arm einen Demodulator 12 und einen logischen Korrelator 13 beinhaltet und der andere Arm einen Demodulator 15 und einen logischen Korrelator 16. Demodulator 15 wird mit einem ersten Takt angesteuert. Demodulator 12 wird mit einem zweiten Takt angesteuert. Der erste und der zweite Takt haben die gleiche Taktfrequenz, aber unterschiedliche Phasen. Der erste Takt entspricht dem Symboltakt eines kodierten Kommunikationssignals. Es ist ein Verzögerungsglied 17 vorgesehen, das eine Verzögerung von einer halben Taktperiode aufweist. Der erste Takt wird dem Verzögerungsglied 17 zugeführt, in dem er um eine halbe Taktperiode verzögert wird. Auf diese Weise wird der zweite Takt generiert.

Jeder Demodulator 12 und 15 ist geeignet, eine Demodulation der empfangenen Synchronisationssignale unter Verwendung einer Multiplikation mit +1 und -1 durchzuführen. Die Demodulation erfolgt damit auf gleiche Art und Weise wie die Modulation auf der Sendeseite.

Jeder logische Korrelator 13 und 16 dient zur Korrelation von zeitlich nacheinander ausgesandten, identischen Synchronisationssignale mit einem Synchronisations-Kode, der kein CDMA-Kommunikations-Kode ist, sowie zur Akkumulation der korrellierten Synchronisationssignale innerhalb dieser Korrelatoren zur Ausmittelung von Störungen durch die Kommunikations-Kodes anderer Endstellen.

Zur Detektion der Synchronisationssignale reicht grundsätzlich ein Pfad aus. Ein Pfad beinhaltet einen Demodulator und einen logischen Korrelator, z.B. Demodulator 15 und Korrelator 16. Ein empfangenes Synchronisationssignal liegt in der Regel innerhalb einer Symbol-Taktperiode. Im Korrelator 16 wird die Laufzeitverzögerung des Synchronisationssignals bestimmt. Diese somit gemessene Verzögerung wird im nächsten Schritt für diese Sendeeinrichtung vorgehalten und damit kompensiert, um die Einstellung des orthogonalen Kommunikations-Kodes zu gewährleisten. Alle in der Empfangseinrichtung 3 ankommenden Kommunikations-Kodes von verschiedenen Sendeeinrichtungen sind dadurch in einer zueinander synchronen Lage. In seltenen Fällen kann das empfangene Synchronisationssignal auch innerhalb von zwei Taktperioden liegen, nämlich dann, wenn es aufgrund der Laufzeitverzögerung just zu dem Zeitpunkt bei der Zentrale eintrifft, an dem eine Umschaltung der Demodulation von +1 auf -1 oder umgekehrt erfolgt. Eine Detektion ist dann auf Grund der Multiplikation eines Teils des empfangenen Synchronisationssignals mit + 1 und der Multiplikation eines anderen Teils des empfangenen Synchronisationssignals mit -1 nicht möglich.

Zur Behebung dieses Mangels kann eine Endstelle z.B. von sich aus nach einer gewissen Zeitspanne, in der die Aufsynchronisation gescheitert ist, die Aussendung der Synchronisationssignale mit einer anderen Phasenlage durchführen. Die Endstelle hat dazu z.B. einen Zufallsgenerator, der die Phasenlage bestimmt, oder ein Verzögerungsglied, das eine Verzögerung um eine halbe Taktperiode durchführt. Die ausgesendeten Synchronisationssignale treffen dann wieder so in der Zentrale ein, dass sie vollständig innerhalb einer Taktperiode liegen und können dann detektiert werden.

Im ersten Ausführungsbeispiel kann jede Endstelle zu beliebigen Zeitpunkten senden. Die Zentrale gewährleistet, dass zu jedem Zeitpunkt empfangene Synchronisationssignale detektierbar sind und somit eine Aufsynchronisation möglich ist. Dies wird durch die Bereitstellung von zwei Pfaden erreicht. In dem einen Pfad, gebildet durch Demodulator 15 und Korrelator 16, wird die Demodulation mit einem ersten Takt durchgeführt. In dem anderen Pfad, gebildet durch Demodulator 12 und Korrelator 13, wird die Demodulation mit einem zweiten, um 180 Grad verschobenen Takt durchgeführt. Die Phasen der beiden Takte liegen um eine halbe Symbol-Taktperiode auseinander. Dadurch ist sichergestellt, dass die empfangenen Synchronisationssignale mindestens in einem Pfad vollständig innerhalb einer Symbol-Taktperiode liegen und somit mindestens in einem Pfad detektierbar sind.

Auswahlschalter 14 leitet die detektierten Synchronisationssignale desjenigen Pfades weiter, dessen Ausgangssignalpegel einen vorgegebenen Schwellwert überschreitet.

Der Signalpegel jedes Synchronisationssignals wird durch den Vorwärtskanal von der Zentrale direkt vorgegeben. Alternativ gibt die Zentrale einen maximalen Pegel vor, der nicht überschritten werden darf, so daß eine indirekte Einstellung erfolgt. Die Zentrale stellt die Signalpegel beispielsweise derart ein, daß der Summen-Signalpegel aller gleichzeitig gesendeten Synchronisationssignale mindestens 10dB niedriger als der Summen-Signalpegel aller gleichzeitig gesendeten Kommunikationssignale ist. Die Zentrale mißt dazu alle über den Rückkanal empfangenen Signalpegel und errechnet daraus optimierte Signalpegel, die über den Vorwärtskanal zu den Endstellen übertragen werden. Die Messung mit anschließender Übertragung der erlaubten Signalpegelwerte erfolgt beispielsweise periodisch in vorgegebenen Zeitschlitzen, sog. time slots. Das Signal-zu-Rauschverhältnis der in der Zentrale empfangenen Kommunikationssignale darf durch die Synchronisationsignale nicht oder nur unwesentlich beeinträchtigt werden, da sonst eine Störung des gesamten Systems erfolgen kann. Das Synchronisationssignal wird im gleichen Übertragungskanal wie das Informationssignal übertragen.

Des weiteren ist eine Einheit 8 vorgesehen. Die Einheit 8 beinhaltet beispielsweise einen Optisch/Elektrisch Wandler, eine HF-Empfangseinheit oder eine Antenne einer Basisstation. Die Einheit 8 beinhaltet ferner einen Splitter zur Aufteilung der empfangenen Signale und zur Weiterleitung der empfangenen Signale zur Einheit 18 und zur Einheit 19.

Die Endgeräte der Endstellen, die über das Mehrpunkt-zu-Punkt CDMA Netzwerk 2 kommunizieren wollen, werden üblicherweise auch als Set-Top Unit, Set-Top Box, Decoder, Modem, Terminal Station oder Kundeneinheit bezeichnet. Jedes Endgerät beinhaltet die Sendeeinrichtung 1, die der Aussendung der von der entsprechenden Endstelle generierten Kommunikationssignale, z.B. Anforderungssignale zur Übermittlung von Videofilmen, sog. Video-on-demand, oder web pages aus dem Internet, und der von der entsprechenden Endstelle generierten Synchronisationssignale zur Anmeldung und Aufsynchronisation bei der Zentrale dient. Jedes Endgerät beinhaltet des weiteren eine nicht dargestellte Steuereinheit, die die Verarbeitung der über den Vorwärtskanal empfangenen Signale übernimmt. Die Steuereinheit ist beispielsweise als Prozessor plus Speicher, Register, etc. ausgeführt. Die Steuereinheit hat beipielsweise eine Infrarot-Schnittstelle zum Empfang von über eine Fernbedienung ausgesandten Anforderungsignalen eines Teilnehmers und eine Schnittstelle zu einem Fernsehgerät und/oder einen Computer zur Darstellung der über den Vorwärtskanal empfangenen Informationen.

Im folgenden wird ein Synchronisationsverfahren für das synchrone Mehrpunkt-zu-Punkt CDMA Netzwerk 2 beschrieben.

Die Endstellen, die bereits aufsynchronisiert sind, senden CDMA-kodierte Kommunikationssignale zur Zentrale. Die CDMA Kodierung erfolgt durch orthogonale Kodes. Jeder Endstelle werden ein oder mehrere individuelle Kodes zugewiesen, mittel derer sie ihre Informationen, d.h. zu übertragenden Daten, vor der Aussendung kodiert. Als CDMA Kode können z.B. Kodes aus der Familie der Extended Preferentially Phased Gold Kodes oder der Walsh Hadamard Kodes verwendet werden, die mit unterschiedlichen Längen, z.B. 128 Chips, verfügbar sind.

Während nun bereits einige Endstellen aufsynchronisiert sind und kontinuierlich, jeweils mit unterschiedlichen CDMA-Kommunikations-Kodes in einem vorgegebenen Übertragungskanal Kommunikationssignale zur Zentrale übertragen, kann sich eine noch nicht synchronisierte Endstelle jederzeit (oder in von der Zentrale vorgegebenen Zeitschlitzen) und gleichzeitig zur Übertragung der Kommunikationssignale anderer Endstellen aufsynchronisieren, indem sie ein Synchronisationssignal generiert, das sie zeitlich nacheinander mehrfach an die Zentrale sendet. Der Signalpegel des Synchronisationssignals ist dabei geringer als der Signalpegel des von einer Endstelle nach der Synchronisation ausgesandte Kommunikationssignals. Beispielsweise ist die Summe der Signalpegel der Synchronisationssignale aller sich aufsynchronisierenden Endstellen um 20dB geringer als die Summe der Signalpegel der Informationssignale aller Nutzinformation aussendenden Endstellen. Dadurch wird erreicht, daß die Synchronisationssignale die Informationsübermittlung nur in einer vernachlässigbaren Weise beeinträchtigt.

Das Synchronisationssignal wird kodiert und moduliert sowie im gleichen Übertragungskanal und /oder im gleichen Frequenzbereich wie das Informationssignal übertragen. Es sind damit keine Rahmen mehr vorgesehen, in denen zeitliche Bereiche zur exklusiven Nutzung einer bestimmten Übermittlung vorgesehen sind, sondern jede Endstelle ist frei ihre Synchronisationssignale zu jeder beliebigen Zeit zu senden, parallel zu gleichzeitig ausgesandten Informationssignalen anderer Endstellen.

In der Zentrale wird das empfangene Synchronisationssignal erst durch Demodulation, logische Korrelation mit einem Synchronisations-Kode, der kein CDMA-Kommunikations-Kode ist, und anschließender Akkumulation der korrellierten Synchronisationssignale detektiert.

Als Synchronisations-Kode wird beispielsweise ein Barker Kode mit einer Länge von 11 chip verwendet. Die Länge des Synchronisations-Kodes ist damit mindestens um den Faktor fünf kürzer ist als die Länge des CDMA-Kommunikations-Kodes. Dadurch wird erreicht, daß die Detektion der Synchronisationsignale vereinfacht wird. Zudem wird die Beeinträchtigung der Informationsübermittlung durch den kürzeren Kode minimiert. Die Generierung eines Synchronisationssignals kann beispielsweise auf einfache Art und Weise dadurch erfolgen, daß der Barker-Kode mit einer vorgegebenen Signalleistung ausgesandt wird.

Die Akkumulatorfunktion ist beispielsweise in einem Register oder einem Integrator oder dgl. implementiert.

Jeder logische Korrelator 13 und 16 ist beispielsweise als Matched Filter, das auf den Synchronisations-Kode, z.B. Barker Kode abgestimmt ist, ausgeführt.

Bei der Verwendung von kohärenter Detektion wird zuerst korreliert und anschließend akkumuliert. Bei der Verwendung von quasi-kohärenter Detektion wird nach der Akkumulation eine Quadrierung durchgeführt. Bei der Verwendung von nicht-kohärenter Detektion wird zuerst korreliert, dann quadriert und anschließend akkumuliert.

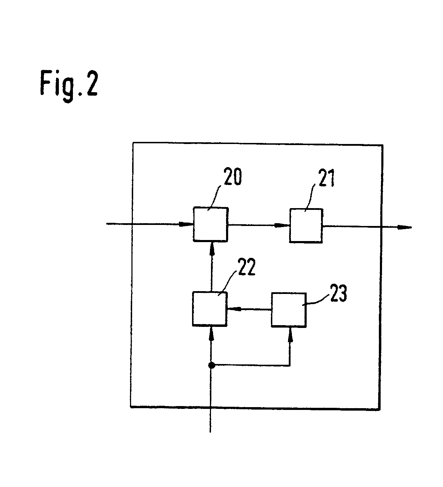

Das zweite Ausführungsbeispiel wird nun unter Zuhilfenahme von Fig. 2 erläutert. Fig. 2 zeigt einen Teil einer erfindungsgemäßen Empfangseinrichtung. Der Teil entspricht einer Einheit zum Empfang und zur Detektion der Synchronisationssignale und stellt eine Alternative zur Einheit 19 zum Empfang und zur Detektion der Synchronisationssignale aus Fig. 1 dar. Die Einheit des zweiten Ausführungsbeispiels beinhaltet einen Demodulator 20 und einen logischen Korrelator 21, die in ihrem Aufbau und ihrer Funktion dem Demodulator 15 bzw. dem Korrelator 16 aus Fig. 1 entsprechen.

Des weiteren ist ein Umschalter 22 und ein Verzögerungsglied 23 vorgesehen.

Demodulator 20 wird durch einen ersten Takt gesteuert, der dem ersten Takt aus Fig. 1 entspricht und über Umschalter 22 zugeführt wird. Dies ist die Default Einstellung. Der erste Takt wird ferner über das Verzögerungsglied, das eine Verzögerung von einer halben Taktperiode generiert, dem Umschalter 22 zugeführt. In einer zweiten Einstellung wird der verzögerte erste Takt dem Demodulator 20 über Umschalter 22 zugeführt. Dies ist dann der Fall, wenn die empfangenen Synchronisationssignale in zwei Taktperioden liegen und mit dem ersten Takt nicht detektiert werden können.

Der Demodulator 20 wird somit mit einem Takt angesteuert, bei dem mindestens zwei Phasenlagen einstellbar sind.

## Patentansprüche

1. Sendeeinrichtung (1) für ein synchrones Mehrpunkt-zu-Punkt CDMA Netzwerk (2), beinhaltend eine erste Einheit (4) zur Generierung eines CDMA-kodierten Informationssignals und eine zweite Einheit (6) zur Generierung eines kodierten Synchronisationssignals, worin
die zweite Einheit (6) eingerichtet ist, ein Synchronisationssignal mit einem Signalpegel zu generieren, der geringer ist als der Signalpegel des Informationssignals und/oder das Synchronisationssignal mit einem Kode zu kodieren, der nicht dem CDMA-Kommunikations-Kode des Informationssignals entspricht,
**dadurch gekennzeichnet**
**dass** ein Modulator (7) vorgesehen ist, der der zweiten Einheit (6) nachgeschaltet ist und zur Modulation des kodierten Synchronisationssignals unter Verwendung einer alternierenden Multiplikation mit +1 und -1dient.

2. Sendeeinrichtung (1) nach Anspruch 1, **dadurch gekennzeichnet, dass** das Synchronisationssignal im gleichen Übertragungskanal und/oder im gleichen Frequenzbereich wie das Informationssignal ausgesandt wird.

3. Empfangseinrichtung (3) für ein synchrones Mehrpunkt-zu-Punkt CDMA Netzwerk (2), beinhaltend eine erste Einheit (18) zum Empfang und zur Detektion eines CDMA-kodierten Informationssignals und eine zweite Einheit (19) zum Empfang und zur Detektion eines kodierten Synchronisationssignals, worin
die zweite Einheit (19) eine Reihenschaltung aus einem Demodulator (15; 20) und einem logischen Korrelator (16; 21) beinhaltet und eingerichtet ist, ein Synchronisationssignal mit einem Signalpegel, der geringer ist als der Signalpegel des Informationssignals und/oder ein Synchronisationssignal, das mit einem Kode kodiert ist, der nicht dem CDMA-Kommunikations-Kode des Informationssignals entspricht, zu demodulieren und unter Verwendung einer anschliessenden Korrelation mit integrierter Akkumulation zu detektieren,
**dadurch gekennzeichnet ,**
**dass** die Demodulation unter Verwendung einer alternierenden Multiplikation mit +1 und -1 stattfindet.

4. Empfangseinrichtung (3) nach Anspruch 3, **dadurch gekennzeichnet, dass** die zweite Einheit (19) zwei parallel geschaltete, logische Korrelatoren (13, 16) zur Korrelation des Synchronisationssignals und zwei Demodulatoren (12, 15) beinhaltet, dass der eine Demodulator (15) dem einen Korrelator (16) vorgeschaltet ist und der andere Demodulator (12) dem anderen Korrelator (13) vorgeschaltet ist, dass der eine Demodulator (15) mit einem ersten Takt angesteuert wird und dass der andere Demodulator (12) mit einem zweiten Takt angesteuert wird, wobei der zweite Takt die gleiche Taktfrequenz hat wie der erste Takt und eine vorgegebene Phasendifferenz gegenüber dem ersten Takt aufweist.

5. Empfangseinrichtung (3) nach Anspruch 4, **dadurch gekennzeichnet, dass** ein Verzögerungsglied (17) mit einer Verzögerung von einer halben Taktperiode vorgesehen ist, das eingerichtet ist, aus dem ersten Takt den zweiten Takt zu generieren.

6. Empfangseinrichtung (3) nach Anspruch 4, **dadurch gekennzeichnet, dass** jeder Demodulator (12, 15) eingerichtet ist, eine Demodulation unter Verwendung einer alternierenden Multiplikation mit +1 und -1 durchzuführen.

7. Empfangseinrichtung (3) nach Anspruch 4, **dadurch gekennzeichnet, dass** den Korrelatoren (13, 16) ein Auswahlschalter (14) zur Auswahl eines der Ausgänge der Korrelatoren (13, 16) nachgeschaltet ist.

8. Empfangseinrichtung (3) nach Anspruch 4, **dadurch gekennzeichnet, dass** der erste Takt dem Symboltakt eines kodierten Kommunikationssignals entspricht.

9. Empfangseinrichtung (3) nach Anspruch 3, **dadurch gekennzeichnet, dass** der Demodulator (20) mit einem Takt angesteuert wird, bei dem mindestens zwei Phasenlagen einstellbar sind.

10. Synchronisationsverfahren für ein synchrones Mehrpunkt-zu-Punkt CDMA Netzwerk (2), das mindestens zwei Endstellen und eine Zentrale beinhaltet, wobei die Endstellen CDMA-kodierte Informationssignale und zur Aufsynchronisation Synchronisationssignale zur Zentrale übertragen,
**dadurch gekennzeichnet,**
**daß** jede Endstelle zur Aufsynchronisation zeitlich nacheinander mindestens zwei kodierte Synchronisationssignale, die jeweils einen Signalpegel aufweisen, der geringer ist als der Signalpegel eines Informationssignals und/oder jeweils mit einem Kode kodiert sind, der nicht dem CDMA-Kommunikations-Kode der Informationssignale entspricht, zur Zentrale überträgt
**dadurch gekennzeichnet,**
**dass** die zwei kodierten Synchronisationssignale von den Endstellen unter Verwendung einer Multiplikation mit +1 und -1 moduliert werden, und dass die Zentrale die Synchronisationssignale durch Demodulation (15; 20) mittels einer alternierenden Multiplikation mit +1 und -1 und mit anschliessen der logischer Korrelation (16; 21) mit integrierter Akkumulation detektiert.

## Claims

1. Transmitting device (1) for a synchronous multipoint-to-point CDMA network (2), containing a first unit (4) for generating a CDMA-coded information signal and a second unit (6) for generating a coded synchronization signal, wherein the second unit (6) is set up to generate a synchronization signal with a signal level that is lower than the signal level of the information signal and/or to encode the synchronization signal with a code that does not correspond to the CDMA communications code of the information signal, **characterized in that** a modulator (7) is provided, which is connected in series to the second unit (6) and is used to modulate the coded synchronization signal using alternating multiplication by +1 and -1.

2. Transmitting device (1) according to claim 1, **characterized in that** the synchronization signal is sent in the same transmission channel and/or in the same frequency range as the information signal.

3. Receiving device (3) for a synchronous multipoint-to-point CDMA network (2), containing a first unit (18) for receiving and detecting a CDMA-coded information signal and a second unit (19) for receiving and detecting a coded synchronization signal, wherein the second unit (19) contains a series circuit of a demodulator (15; 20) and a logical correlator (16; 21) and is set up to demodulate and to detect, using subsequent correlation with integrated accumulation, a synchronization signal with a signal level that is lower than the signal level of the information signal and/or a synchronization signal that is encoded using a code that does not correspond to the CDMA communications code of the information signal, **characterized in that** demodulation takes place using alternating multiplication by +1 and -1.

4. Receiving device (3) according to claim 3, **characterized in that** the second unit (19) contains two logical correlators (13, 16) connected in parallel for correlating the synchronization signal and two demodulators (12, 15), that one demodulator (15) is connected in the incoming circuit to one correlator (16) and the other demodulator (12) is connected in incoming circuit to the correlator (13), that one demodulator (15) is driven by a first clock pulse and that the other demodulator (12) is driven by a second clock pulse, the second clock pulse having the same clock pulse frequency as the first clock pulse and a preset phase difference compared with the first clock pulse.

5. Receiving device (3) according to claim 4, **characterized in that** a delay element (17) with a delay of half a clock pulse period is provided, which element is set up to generate the second clock pulse from the first clock pulse.

6. Receiving device (3) according to claim 4, **characterized in that** each demodulator (12, 15) is set up to carry out demodulation using alternating multiplication by +1 and -1.

7. Receiving device (3) according to claim 4, **characterized in that** a selector switch (14) for selecting one of the outputs of the correlators (13, 16) is connected in series to the correlators (13, 16).

8. Receiving device (3) according to claim 4, **characterized in that** the first clock pulse corresponds to the symbol clock pulse of a coded communications signal.

9. Receiving device (3) according to claim 3, **characterized in that** the demodulator (20) is driven by a clock pulse in which at least two phase positions can be set.

10. Synchronization procedure for a synchronous multipoint-to-point CDMA network (2), containing at least two terminal stations and an exchange, the terminal stations transmitting to the exchange CDMA-coded information signals and synchronization signals for locking on, **characterized in that** for locking on each terminal station transmits to the exchange at least two coded synchronization signals consecutively in time, each of which signals has a signal level that is lower than the signal level of an information signal and/or each of which is encoded with a code that does not correspond to the CDMA communications code of the information signals, and that the two coded synchronization signals are modulated by the terminal stations using multiplication by +1 and -1, and that the exchange detects the synchronization signals by demodulation (15; 20) by means of alternating multiplication by +1 and -1 and with subsequent logical correlation (16; 21) with integrated accumulation.

## Revendications

1. Émetteur (1) dans un réseau CDMA multipoints à point (2), comprenant une première unité (4) pour la génération d'un signal d'information CDMA codé et une seconde unité (6) pour la génération d'un signal de synchronisation codé, dans lequel la seconde unité (6) est équipée pour générer un signal de synchronisation avec un niveau inférieur au niveau du signal d'information et/ou coder le signal de synchronisation avec un code ne correspondant pas au code de communication CDMA du signal d'information, **caractérisé en ce qu'**un modulateur (7) est prévu, branché en aval de la seconde unité (6) et servant à la modulation du signal de synchronisation codé par l'utilisation d'une multiplication alternée par + 1 et - 1.

2. Émetteur (1) selon la revendication 1, **caractérisé en ce que** le signal de synchronisation est émis via le même canal de transmission et/ou dans la même gamme de fréquences que le signal d'information.

3. Récepteur (3) dans un réseau CDMA multipoints à point (2), comprenant un première unité (18) pour la réception et la détection d'un signal d'information CDMA codé et une seconde unité (19) pour la réception et la détection d'un signal de synchronisation codé, dans lequel la seconde unité (19) comprend un branchement en série composé d'un démodulateur (15 ; 20) et d'un dispositif logique de corrélation (16 ; 21) et est équipé pour démoduler un signal de synchronisation, ayant un niveau inférieur au niveau du signal d'information, et/ou un signal de synchronisation codé par un code ne correspondant pas au code de communication CCDMA du signal d'information, ainsi que pour détecter ces signaux en utilisant un corrélation avec accumulation intégrée, **caractérisée en ce que** la démodulation se fait par l'utilisation d'une multiplication alternée par + 1 et - 1.

4. Récepteur (3) selon la revendication 3, **caractérisé en ce que** la seconde unité (19) comprend deux dispositifs logiques de corrélation connectés en parallèle (13, 16) pour la corrélation du signal de synchronisation et deux démodulateurs (12, 15), **caractérisés en ce qu'**un des démodulateurs (15) est branché en amont d'un des dispositifs de corrélation (16), **caractérisé en ce qu'**un des démodulateurs (15) est dirigé par un premier cycle et **caractérisé en ce que** l'autre démodulateur (12) est dirigé par un second cycle, moyennant quoi le second cycle a la même fréquence que le premier cycle et présente un différence de phase fixée à l'avance par rapport au premier cycle.

5. Récepteur (3) selon la revendication 4, **caractérisé en ce qu'**un circuit de retard (17) est prévu avec un retard d'une demi période de cycle et est équipé pour générer le second cycle au départ du premier cycle.

6. Récepteur (3) selon la revendication 4, **caractérisé en ce que** chaque démodulateur (12, 15) est équipé pour effectuer une démodulation en utilisant une multiplication alternée par + 1 et - 1.

7. Récepteur (3) selon la revendication 4, **caractérisé en ce qu'**un interrupteur de sélection (14) est mis en circuit en aval des dispositifs de corrélation (13, 16) pour la sélection d'une des sorties des dispositifs de corrélation (13, 16).

8. Récepteur (3) selon la revendication 4, **caractérisé en ce que** le premier cycle correspond au cycle symbolique d'un signal de communication codé.

9. Récepteur (3) selon la revendication 3, **caractérisé en ce que** le démodulateur (20) est dirigé par un cycle pour lequel au moins deux relations de phase sont réglables.

10. Procédé de synchronisation dans un réseau CDMA multipoints à point synchrone (2), comprenant au moins deux terminaux et une centrale et dans lequel les terminaux transmettent à la centrale des signaux d'informations CDMA codés et des signaux de synchronisation lors de la synchronisation, **caractérisé en ce que**, lors de la synchronisation, chaque terminal transmet à la centrale au moins deux signaux de synchronisation codés l'un après l'autre, dont le niveau est inférieur au niveau d'un signal d'information et/ou qui sont toujours codés, avec un code ne correspondant pas au code de communication CDMA des signaux d'informations, **caractérisé en ce que** les deux signaux de synchronisation codés sont modulés par les terminaux en utilisant une multiplication alternée par + 1 et - 1 et **en ce que** la centrale détecte les signaux de synchronisation par démodulation (15, 20) au moyen d'une multiplication alternée par + 1 et - 1 et avec la corrélation logique s'y rapportant (16, 21) avec accumulation intégrée.
